# EUROPÄISCHE PATENTSCHRIFT

(11) **EP 2 806 319 B1**
(45) Veröffentlichungstag und Bekanntmachung des Hinweises auf die Patenterteilung: **22.01.2020**
(21) Anmeldenummer: 14305777.6
(22) Anmeldetag: 26.05.2014
(51) Int. Cl.: G05B 19/05, G06F 9/44, G06F 8/34

(54) **Konfigurationssoftware und Verfahren zum Erstellen von Konfigurationsdaten und eines PLC-Programms für ein eine speicherprogrammierbare Steuerung umfassendes Steuer- und/oder Schutzgerät für die Mittel- oder Hochspannungstechnik**
Configuration software and method for creating configuration data and a PLC program for a stored program controller comprising control and/or protective devices for medium-voltage or high-voltage equipment
Logiciel de configuration et procédé d'élaboration de données de configuration et d'un programme PLC pour un appareil de commande et/ou de protection comportant une commande de stockage programmable pour la technologie de moyenne ou haute tension

(30) Priorität: 24.05.2013 DE 102013209676
(43) Veröffentlichungstag der Anmeldung: 26.11.2014
(73) Patentinhaber: Schneider Electric Industries SAS, 92500 Rueil-Malmaison (FR)
(72) Erfinder: Bogie, Wolfgang, 93053 Regensburg (DE); Zeller, Franz, 85101 Lenting (DE); Millaud, Eric, 30250 Villevieille (FR); Brown, Paul, Newcastle-under-Lyme, Staffordshire ST5 6SX (GB)
(74) Vertreter: Manitz Finsterwald Patent- und Rechtsanwaltspartnerschaft mbB

(56) Entgegenhaltungen:
- DE-A1-102008 035 654
- DE-A1-102010 026 494
- US-A1- 2007 291 437

## Beschreibung

Die Erfindung betrifft eine Konfigurationssoftware zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für ein Schaltgerät für die Mittel- oder Hochspannungstechnik und ein entsprechendes Verfahren sowie einen Datenträger, auf dem die Konfigurationssoftware gespeichert ist.

Schaltgeräte wie insbesondere Leistungsschalter, Trennschalter oder Erdungsschalter werden in Schaltanlagen für die Mittel- oder Hochspannungstechnik eingesetzt, um die zur Verteilung elektrischer Energie in einem elektrischen Energieversorgungsnetz notwendigen Schaltaktionen durchzuführen. Eine Schaltanlage umfasst typischerweise ein oder mehrere Schaltfelder, zum Beispiel ein oder mehrere Einspeise-, Abgangs- oder Kuppelfelder, die jeweils eine oder mehrere Sammelschienen mit einer Übertragungs- oder Verteilerleitung oder miteinander schaltbar verbinden und dazu ein oder mehrere Schaltgeräte umfassen. Ein Schaltgerät umfasst typischerweise wenigstens eine Antriebskomponente zum Betätigen des Schaltgeräts.

Ein Schaltfeld umfasst üblicherweise ein Steuer- und/oder Schutzgerät, welche dazu eingerichtet ist, die Schaltgeräte des Schaltfelds zu überwachen und/oder zu steuern und dazu Melde-, Steuer- und Verriegelungsfunktionen für die Schaltgeräte bereitzustellen, wobei es Meldesignale von den Schaltgeräten empfängt und Steuersignale für die Schaltgeräte bzw. für deren Antriebskomponenten ausgibt. Eine Verriegelungsfunktion dient dazu, Schalthandlungen des Schaltgeräts nur unter bestimmten Voraussetzungen zuzulassen, z.B. bei Vorliegen bestimmter Zustände des Schaltgeräts selbst, weiterer Schaltgeräte des Schaltfelds und/oder der Schaltanlage insgesamt.

Es ist mit einem hohen Aufwand verbunden, für jedes individuelle, in einer bestimmten Weise eingerichtete Schaltfeld ein speziell angepasstes Steuer- und/oder Schutzgerät bereitzustellen, welches die gewünschte Überwachungs- und/oder Steuerfunktionalität für die Schaltgeräte dieses bestimmten Schaltfelds bereitstellt.

Es sind Konfigurationsprogramme bekannt, mit denen eine Schaltanlage mit einem oder mehreren Schaltfeldern und einem oder mehreren Schaltgeräten projektiert werden kann, wobei vielfältige, die Schaltanlage betreffende Parameter manuell eingegeben werden können, um eine umfassende Konfiguration und Dokumentation für die projektierte Schaltanlage zu erhalten. Der mit der Bereitstellung eines geeignet eingerichteten Steuer- und/oder Schutzgeräts für die individuellen Schaltfelder einhergehende Aufwand wird dadurch aber nicht verringert.

In der Prozessautomatisierungstechnik werden speicherprogrammierbare Steuerungen (SPS oder auch PLC) eingesetzt, die sich aufgrund ihres hardwaretechnischen Aufbaus und ihrer flexiblen Programmierbarkeit zur Steuerung von unterschiedlichen technischen Prozessen eignen. Aufgrund ihrer weiten Verbreitung sind speicherprogrammierbare Steuerungen, die eine hohe Zuverlässigkeit und Sicherheit aufweisen, kostengünstig erhältlich.

Aufgrund ihrer flexiblen Programmierbarkeit sind speicherprogrammierbare Steuerungen prinzipiell auch geeignet, Steuerfunktionen, Meldefunktionen und/oder Verriegelungsfunktionen für wenigstens ein Schaltgerät für die Mittel- oder Hochspannungstechnik bereitzustellen. Allerdings setzt die Anpassung der speicherprogrammierbaren Steuerung an diese Steuer- und/oder Überwachungsfunktionen eine aufwändige Programmierung der speicherprogrammierbaren Steuerung voraus, welche mit einem hohen manuellen Programmierungsaufwand verbunden ist und erhebliche Programmierkenntnisse des die Programmierung erstellenden Benutzers erfordert.

Aus der US 2007/0291437 A1 ist ein Steuer- und/oder Schutzgerät bekannt. Aus der DE 10 2008 035 654 A1 ist ein Verfahren zur Anpassung einer Steuerungslogik eines Systems bekannt.

Es ist daher eine Aufgabe der Erfindung, eine Konfigurationssoftware und ein Verfahren anzugeben, mit denen auf einfache Weise und mit geringem Aufwand ein Steuer- und/oder Schutzgerät bereitgestellt werden kann, das zum Überwachen und/oder Steuern einer Antriebskomponente für ein in einer bestimmten Weise eingerichtetes Schaltgerät für die Mittel- oder Hochspannungstechnik konfiguriert ist. Insbesondere soll ein Benutzer die Software zu diesem Zweck nutzen und das Verfahren durchführen können, ohne über Programmierkenntnisse verfügen zu müssen.

Die Aufgabe wird durch eine Konfigurationssoftware mit den Merkmalen des Anspruchs 1 gelöst.

Die Konfigurationssoftware dient zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für ein Schaltgerät für die Mittel- oder Hochspannungstechnik. In die Konfigurationssoftware ist eine PLC-Programmiersoftware zur Programmierung einer speicherprogrammierbaren Steuerung integriert.

Mit der Konfigurationssoftware lassen sich folglich nicht nur Konfigurationsdaten für das Steuer- und/oder Schutzgerät erstellen, sondern gleichzeitig ein von der speicherprogrammierbaren Steuerung unmittelbar ausführbares PLC-Programm, mit dem die speicherprogrammierbare Steuerung so programmierbar ist, dass sie die Steuerfunktionen, Meldefunktionen und/oder Verriegelungsfunktionen für das Schaltgerät implementiert.

Die Integration der PLC-Programmiersoftware in die Konfigurationssoftware ermöglicht dabei die automatische Erstellung eines die jeweils gewünschte Funktionalität bereitstellenden PLC-Programms abhängig von einer durch den Benutzer vorgegebenen Konfiguration des Schaltgeräts bzw. eines das Schaltgerät umfassenden Schaltfelds oder der übergeordneten Schaltanlage, ohne dass auf Seiten des Benutzers Programmierkenntnisse erforderlich wären. Stattdessen muss der Benutzer nur die Konfiguration des Schaltgeräts bzw. Schaltfelds oder der Schaltanlage bestimmen, zum Beispiel durch manuelle Eingabe oder Auswahl entsprechender Grunddaten, woraufhin unter Verwendung der integrierten PLC-Programmiersoftware automatisch das PLC-Programm erstellt wird.

Als PLC-Programmiersoftware, welche vorzugsweise ein PLC-Programmierprogramm ist, kann dabei eine Standardsoftware zur Erstellung eines PLC-Programms verwendet werden, welche vorzugsweise dem Standard EN 61131-3 entspricht. Dadurch wird der Aufwand für die Bereitstellung der Konfigurationssoftware reduziert und gewährleistet, dass mit geringem Aufwand ein auf der speicherprogrammierbaren Steuerung lauffähiges PLC-Programm erstellbar ist. Die Standardsoftware kann zum Beispiel einen Compiler umfassen, der Programmdaten, die in einer für den Menschen lesbaren Programmiersprache vorliegen, in ein auf der speicherprogrammierbaren Steuerung direkt lauffähiges PLC-Programm in Maschinencode übersetzt bzw. kompiliert.

Die Konfigurationssoftware umfasst Befehle, um Daten in einem strukturierten Datenformat mit der PLC-Programmiersoftware, insbesondere bidirektional, auszutauschen. Eine solche Konfigurationssoftware lässt sich besonders einfach realisieren, da als PLC-Programmiersoftware eine verfügbare Standardsoftware zum Erzeugen eines lauffähigen PLC-Programms in Maschinencode verwendet werden kann, welche selbständig lauffähig ist und welche lediglich eine Programmschnittstelle zum Austausch von Daten in dem strukturierten Datenformat, zum Beispiel XML, mit der übrigen Konfigurationssoftware aufweisen muss.

Vorteilhafte Ausführungsformen der Erfindung sind in den Unteransprüchen, der Beschreibung und den Figuren beschrieben.

Gemäß einer vorteilhaften Ausführungsform umfasst die Konfigurationssoftware Befehle zur Durchführung eines Konfigurationsverfahrens, welches die Schritte umfasst:
- Empfangen einer Benutzereingabe zum Eingeben oder Auswählen von Grunddaten, die wenigstens ein zu konfigurierendes Schaltgerät beschreiben,
- Erzeugen von Programmdaten für das PLC-Programm in Abhängigkeit von den eingegebenen oder ausgewählten Grunddaten, und
- Erstellen eines PLC-Programms für das wenigstens eine Steuer- und/oder Schutzgerät in der PLC-Programmiersoftware unter Verwendung der Programmdaten.

Die Grunddaten umfassen Informationen über das Schaltgerät, die es ermöglichen, automatisch und ohne manuelle Benutzerinteraktion ein lauffähiges PLC-Programm zu erzeugen, mit dem die speicherprogrammierbare Steuerung so programmierbar ist, dass sie die gewünschten Steuer-, Melde- und/oder Verriegelungsfunktionen für das Schaltgerät bereitstellt. Die Grunddaten können Informationen über den hardwaretechnischen Aufbau, insbesondere über ein oder mehrere Hilfsschalter oder Hilfskontakte des Schaltgeräts umfassen, welche als Stellungsmelder für die aktuelle Schaltstellung des Schaltgeräts dienen können, über einen oder mehrere Einschaltauslöser, Ausschaltauslöser und/oder über einen Motorantrieb zum Verstellen des Schaltgeräts. Aus diesen Informationen werden automatisch und unter Verwendung von in der Konfigurationssoftware implementiertem vordefinierten Expertenwissen Programmdaten erzeugt, welche vorzugsweise Daten umfassen, die in einer für den Menschen verständlichen Form vorliegen, z.B. in einer bekannten Programmiersprache zur Programmierung einer SPS, oder in einem strukturierten Datenformat, welches sich unmittelbar in eine solche Programmiersprache übersetzen lässt. Die PLC-Programmiersoftware erzeugt aus diesen Daten das auf der SPS lauffähige PLC-Programm in Maschinencode.

Die PLC-Programmiersoftware kann so in die Konfigurationssoftware integriert sein, dass die Programmiersoftware zumindest teilweise und insbesondere vollständig durch die restliche Konfigurationssoftware steuerbar ist, um ihre hierin beschriebenen Funktionen auszuführen. Die übrige Konfigurationssoftware und insbesondere ein Konfigurator-Programm der übrigen Konfigurationssoftware dient folglich als Benutzerschnittstelle für die PLC-Programmiersoftware, so dass die Notwendigkeit einer direkten, von der restlichen Konfigurationssoftware unabhängigen Verwendung der PLC-Programmiersoftware durch den Benutzer vollständig vermieden oder zumindest reduziert wird und die Handhabung der Konfigurationssoftware erleichtert wird. Die Steuerung der PLC-Programmiersoftware durch die übrige Konfigurationssoftware kann das Starten und/oder Beenden der PLC-Programmiersoftware umfassen. Die übrige Konfigurationssoftware kann z.B. ein Konfigurator-Programm umfassen, welches Daten mit der PLC-Programmiersoftware austauscht und/oder diese steuert. Das Konfigurator-Programm kann dabei eine grafische Benutzeroberfläche zur Benutzerinteraktion bereitstellen.

Die Programmdaten für das PLC-Programm können zunächst ohne Verwendung der PLC-Programmiersoftware durch die restliche Konfigurationssoftware und insbesondere ein Konfigurator-Programm erzeugt werden. Daraufhin können die Programmdaten für das PLC-Programm, zum Beispiel auf eine Benutzereingabe hin, in dem strukturierten Datenformat in die PLC-Programmiersoftware portiert, d.h. übertragen, werden.

In der PLC-Programmiersoftware wird aus den Programmdaten ein ausführbares PLC-Programm in Maschinencode erzeugt, wobei vorzugsweise ein Kompilieren der Programmdaten erfolgt. Das erzeugte PLC-Programm kann, insbesondere auf eine Benutzereingabe hin, aus der PLC-Programmiersoftware direkt in die speicherprogrammierbare Steuerung geladen oder auf einem Datenträger für die speicherprogrammierbare Steuerung gespeichert werden. Das PLC-Programm kann auch aus der PLC-Programmiersoftware zurück in die übrige Konfigurationssoftware übertragen werden und von dieser in die speicherprogrammierbare Steuerung geladen bzw. auf dem Datenträger gespeichert werden. Der Datenträger ist vorzugsweise derart in die speicherprogrammierbare Steuerung einsetzbar, dass die auf ihm enthaltenen Befehle von der speicherprogrammierbaren Steuerung unmittelbar ausführbar sind.

Gemäß einer vorteilhaften Ausführungsform umfasst die Konfigurationssoftware ein Konfigurator-Programm, welches Befehle enthält, um die PLC-Programmiersoftware zu steuern und/oder um Daten von der PLC-Programmiersoftware zu empfangen, um, insbesondere jeweils auf eine Benutzereingabe hin, vorzugsweise zumindest einen der folgenden Schritte automatisch durchzuführen:
- Starten und/oder Beenden der PLC-Programmiersoftware und/oder einer Benutzeroberfläche der PLC-Programmiersoftware,
- Übermitteln von Programmdaten für das PLC-Programm von dem Konfigurator-Programm an die PLC-Programmiersoftware,
- Erstellen eines PLC-Programms für das wenigstens eine Steuer- und/oder Schutzgerät in der PLC-Programmiersoftware unter Verwendung von von dem Konfigurator-Programm an die PLC-Programmiersoftware übermittelten Programmdaten für das PLC-Programm, und
- Empfangen eines von der PLC-Programmiersoftware übermittelten PLC-Programms für das wenigstens eine Steuer- und/oder Schutzgerät und/oder von von der PLC-Programmiersoftware übermittelten Programmdaten für das PLC-Programm.
Dadurch wird es dem Benutzer ermöglicht, ausgehend von Programmdaten, die in dem Konfigurator-Programm vorliegen, das PLC-Programm für das Steuer- und/oder Schutzgerät zu erzeugen, ohne dass dazu eine Vielzahl von getrennten Benutzereingaben erforderlich ist. Eine Benutzereingabe, die das Starten und/oder Beenden der PLC-Programmiersoftware, das Übermitteln der Programmdaten an die PLC-Programmiersoftware bzw. das Erstellen des PLC-Programms veranlasst, kann dabei in dem Konfigurator-Programm, insbesondere über eine grafische Benutzeroberfläche des Konfigurator-Programms, erfolgen. Das Übermitteln der Daten von der PLC-Programmiersoftware an das Konfigurator-Programm kann durch eine Benutzereingabe in der PLC-Programmiersoftware veranlasst werden, zum Beispiel können die Daten automatisch an das Konfigurator-Programm übermittelt werden, wenn die PLC-Programmiersoftware durch einen Benutzer geschlossen wird, wobei das Konfigurator-Programm dazu eingerichtet ist, die übermittelten Daten automatisch zu empfangen und zu übernehmen.

Der Datenaustausch mit der PLC-Programmiersoftware, z.B. zum Übertragen der Programmdaten in die PLC-Programmiersoftware, kann in dem vorstehend beschriebenen strukturierten Datenformat, z.B. XML, erfolgen.

Eine beispielhafte Abfolge der vorstehend beschriebenen Steuer- und Übertragungsvorgänge ist nachfolgend beschrieben:
Zunächst werden in dem Konfigurator-Programm unter Verwendung einer grafischen Benutzeroberfläche des Konfigurator-Programms Programmdaten für das PLC-Programm erzeugt. Empfängt das Konfigurator-Programm eine entsprechende Benutzereingabe, wird automatisch die PLC-Programmiersoftware und/oder eine grafische Benutzeroberfläche der PLC-Programmiersoftware gestartet und/oder die Programmdaten werden automatisch an die PLC-Programmiersoftware übertragen, wobei die übertragenen Programmdaten vorzugsweise auf einer grafischen Benutzeroberfläche der PLC-Programmiersoftware angezeigt werden und von dem Benutzer unter Verwendung der grafischen Benutzeroberfläche der PLC-Programmiersoftware vorzugsweise veränderbar sind. Auf eine entsprechende Benutzereingabe in dem Konfigurator-Programm und/oder in der PLC- Programmiersoftware hin erstellt die PLC- Programmiersoftware vorzugsweise automatisch das PLC-Programm. Auf eine Benutzereingabe zum Schließen der PLC-Programmiersoftware bzw. deren grafischer Benutzeroberfläche hin wird das PLC-Programm von der PLC-Programmiersoftware automatisch zurück zu dem Konfigurator-Programm übertragen. Alternativ zu dem PLC-Programm oder zusätzlich dazu können auf die Benutzereingabe hin automatisch die in der PLC-Programmiersoftware vorhandenen Programmdaten zurück zu dem Konfigurator-Programm übertragen können, vorzugsweise zumindest dann, wenn die Programmdaten in der PLC-Programmiersoftware gegenüber den von dem Konfigurator-Programm an die PLC-Programmiersoftware übertragenen Programmdaten geändert worden sind.

Gemäß einer Ausführungsform ist eine Bibliothek vorgesehen, in der verschiedene vordefinierte Schaltgeräte und den vordefinierten Schaltgeräten zugeordnete vordefinierte Grunddaten enthalten sind, die das jeweilige Schaltgerät beschreiben. Vorzugsweise ist bei der Ausführung der Konfigurationssoftware zur Eingabe oder Auswahl von Grunddaten zumindest ein vordefiniertes Schaltgerät aus der Bibliothek, welche auch als HMI-Bibliothek bezeichnet wird, durch einen Benutzer so auswählbar, dass die in der Bibliothek enthaltenen und dem ausgewählten Schaltgerät zugeordneten vordefinierten Grunddaten für die weitere Konfiguration verwendbar sind. Der Benutzer muss somit die Grunddaten für ein bestimmtes zu konfigurierendes Schaltgerät, d.h. zum Beispiel Informationen über Hilfsschalter, Hilfskontakte etc., nicht einzeln manuell eingeben, sondern kann diese einfach durch Auswählen eines bestimmten Schaltgeräts in der Bibliothek gesamtheitlich auswählen. Durch die Bibliothek wird die Eingabe bzw. die Auswahl der Grunddaten erleichtert und außerdem sichergestellt, dass stets Grunddaten ausgewählt werden, die das tatsächliche Schaltgerät korrekt beschreiben.

Gemäß einer Ausführungsform enthält die Konfigurationssoftware Befehle, um die in der Bibliothek enthaltenen vordefinierten Schaltgeräte auf einer grafischen Benutzeroberfläche derart grafisch darzustellen, dass diese von einem Benutzer anhand der jeweiligen grafischen Darstellung auswählbar sind. Eine solche grafisch unterstützte Auswählbarkeit der Schaltgeräte erleichtert die Eingabe und/oder Auswahl der Grunddaten durch den Benutzer zusätzlich. Vorzugsweise werden zur grafischen Darstellung der Schaltgeräte in der Bibliothek enthaltene grafische Ersatzschaltbilder der Schaltgeräte angezeigt. Dadurch wird es erleichtert, ein zu konfigurierendes Schaltgerät korrekt zu identifizieren und auszuwählen.

Vorzugsweise sind bei der Ausführung der Konfigurationssoftware Grunddaten durch einen Benutzer eingebbar oder auswählbar, die ein Schaltfeld mit einem oder mehreren Schaltgeräten und/oder eine mehrere Schaltfelder mit jeweils einem oder mehreren Schaltgeräten umfassende Schaltanlage beschreiben. Die zu programmierende speicherprogrammierbare Steuerung kann zur Steuerung und/oder Überwachung aller Schaltgeräte eines Schaltfelds eingerichtet sein und kann in einem Schaltschrank des Schaltfelds untergebracht sein, in dem auch die Schaltgeräte des Schaltfelds angeordnet sind. Bei einer Schaltanlage mit mehreren Schaltfeldern kann jedem Schaltfeld eine solche speicherprogrammierbare Steuerung zugeordnet und insbesondere in dem Schaltschrank des jeweiligen Schaltfelds untergebracht sein.

Abhängig von Grunddaten, die ein Schaltfeld mit mehreren Schaltgeräten beschreiben, kann das PLC-Programm so erzeugt werden, dass die speicherprogrammierbare Steuerung eine für den Betrieb des Schaltfelds notwendige Interaktion der Schaltgeräte sicherstellt. Beispielsweise können abhängig von einem Zustand, insbesondere Schaltzustand, eines Schaltgeräts andere Schaltgeräte desselben Schaltfelds verriegelt werden, z.B. indem das PLC-Programm keine Schalthandlungen dieses Schaltgeräts veranlasst.

Die Eingabe oder Auswahl der Grunddaten durch den Benutzer kann in einer geführten Weise erfolgen. Beispielsweise kann der Benutzer aufgefordert werden, Eigenschaften des Schaltfelds zu spezifizieren. Dazu können dem Benutzer Werte für einzelne Eigenschaften des Schaltfelds zur Auswahl oder Eingabe angeboten werden. Beispielsweise kann der Benutzer spezifizieren, um welchen Typen oder welche Baureihe von Schaltfeld es sich handelt, ob es sich um ein Einspeisefeld, ein Abgangsfeld oder ein Kuppelfeld handelt, ob es sich um ein Schaltfeld mit einer Sammelschiene oder mehreren Sammelschienen handelt, welche Primärspannung das Schaltfeld aufweist und/oder ob es sich um ein gasisoliertes oder luftisoliertes Schaltfeld handelt.

Bei der Spezifikation einer mehrere Schaltfelder umfassenden Schaltanlage durch den Benutzer können die obigen, ein Schaltfeld betreffenden Grunddaten für jedes Schaltfeld einzeln abgefragt bzw. eingegeben oder ausgewählt werden. Die obigen Grunddaten können auch ganz oder teilweise in Bezug auf die gesamte Schaltanlage abgefragt werden und die eingegebenen oder ausgewählten Werte können dann als Voreinstellung für jedes durch den Benutzer bereits spezifizierte oder noch zu spezifizierende Schaltfeld übernommen werden, wobei die übernommenen Daten von dem Benutzer vorzugsweise für jedes Schaltfeld einzeln veränderbar sind.

Die ein Schaltfeld insgesamt betreffenden Grunddaten können dazu verwendet werden, die Eingabe oder Auswahl weiterer Grunddaten durch den Benutzer so zu führen, dass die Spezifikation funktionsfähiger und realisierbarer Schaltfelder erleichtert wird. Beispielsweise kann abhängig von den das Schaltfeld insgesamt beschreibenden Grunddaten dem Benutzer automatisch eine Vorauswahl von zulässigen Schaltgeräten angeboten werden, die der Benutzer auswählen und dadurch dem Schaltfeld zuordnen kann. Auch die Anzahl der dem Schaltfeld hinzufügbaren Schaltgeräte einer bestimmten Art kann eingeschränkt werden. Beispielsweise kann es einem Benutzer ermöglicht werden, einem als Abgangsfeld spezifizierten Schaltfeld eines bestimmten Typs maximal jeweils einen für diesen Schaltfeldtypen geeigneten Unterbrechungsschalter, Trennschalter und Erdungsschalter hinzuzufügen.

Wie vorstehend beschrieben wird die Eingabe oder Auswahl von Grunddaten für ein Schaltgerät bevorzugt grafisch unterstützt. Bevorzugt ist es dabei, wenn ein auf der grafischen Benutzeroberfläche dargestelltes Schaltgerät, insbesondere durch Drag-and-Drop, ausgewählt und einem ebenfalls auf der Benutzeroberfläche dargestellten Schaltfeld zugeordnet werden kann. Die grafische Darstellung des Schaltfelds kann dabei ein dem Schaltfeld entsprechendes Einliniendiagramm (Single-Line-Diagramm) umfassen.

Die im Rahmen der vorstehend beschriebenen Benutzerführung durch die Konfigurationssoftware verwendeten Informationen über mögliche Schaltfeldeigenschaften und über für bestimmte Schaltfelder zulässige Schaltgeräte können in der vorstehend beschriebenen HMI-Bibliothek abgelegt sein. Ebenso können in der HMI-Bibliothek verschiedene Einliniendiagramme für verschiedene Schaltfelder abgelegt sein, die für die vorstehend beschriebene grafische Darstellung der Schaltfelder verwendbar sind.

Gemäß einer Ausführungsform ist zur Eingabe oder Auswahl von Grunddaten, die eine Schaltanlage beschreiben, ein Schaltfeld, für das bereits Grunddaten eingegeben oder ausgewählt wurden, von einem Benutzer auswählbar und einschließlich der zugehörigen Grunddaten kopierbar. Dadurch wird die Spezifikation einer Schaltanlage erleichtert, da bereits vorhandene Schaltfelder einfach vervielfacht werden können. Wenn für das jeweilige Schaltfeld bereits Programmdaten für das PLC-Programm erzeugt wurden, können diese Programmdaten oder davon abgeleitete Daten ebenfalls kopiert und dem neuen Schaltfeld zugeordnet werden.

Eine weitere Ausführungsform sieht vor, dass bei der Ausführung der Konfigurationssoftware zur Eingabe oder Auswahl von Grunddaten, die zumindest ein Schaltgerät beschreiben, ein oder mehrere Schaltgeräte, Schaltfelder und/oder Schaltanlagen, zu denen bereits Grunddaten eingegeben oder ausgewählt wurden, insbesondere einzeln oder gruppenweise, durch einen Benutzer auswählbar und einschließlich der zugehörigen Grunddaten kopierbar sind. Durch eine solche Kopierbarkeit auf der Schaltgeräte-, Schaltfeld- und Schaltanlagenebene lässt sich die Eingabe und Auswahl der Grunddaten noch weiter erleichtern.

Abhängig von den Grunddaten, die in der vorstehend beschriebenen Weise eingegeben oder ausgewählt wurden, erzeugt die Konfigurationssoftware automatisch die Programmdaten für das PLC-Programm. Dabei werden abhängig von den Grunddaten automatisch Eingänge, Ausgänge, ein Verarbeitungs- bzw. Logikteil und Verbindungen zwischen den Eingängen, den Ausgängen und dem Verarbeitungs- bzw. Logikteil erzeugt, welche die gewünschte Überwachungs- und/oder Steuerfunktionalität für das wenigstens eine Schaltgerät der speicherprogrammierbaren Steuerung implementieren.

In den Programmdaten für das PLC-Programm können auch automatisch Programmbestandteile erzeugt werden, die eine gewünschte Interaktion der speicherprogrammierbaren Steuerung mit einer Bedieneinheit des Steuer- und/oder Schutzgeräts bereitstellen. Dazu können Eingänge, Ausgänge und/oder Bestandteile des Verarbeitungs- bzw. Logikteils vorgesehen und miteinander verknüpft werden, welche dazu dienen, die von der speicherprogrammierbaren Steuerung im Hinblick auf die Schaltanlage durchzuführenden Steuer- und/oder Überwachungsfunktionen abhängig von Steuersignalen durchzuführen, die von der Bedieneinheit bereitgestellt werden, und/oder dazu, Meldesignale zu empfangen, ggf. zu verarbeiten und an einem Ausgang für die Bedieneinheit bereitzustellen, damit die Bedieneinheit entsprechende Meldeanzeigen für den Benutzer erzeugen kann.

Gemäß einer vorteilhaften Ausführungsform ist eine Funktionsbaustein-Datenbank vorgesehen, in der verschiedene vordefinierte Funktionsbausteine für das PLC-Programm enthalten sind. Die verschiedenen vordefinierten Funktionsbausteine sind vorzugsweise zur Implementierung von Steuerfunktionen, Meldefunktionen und/oder Verriegelungsfunktionen für verschiedene Schaltgeräte ausgebildet. Vorzugsweise werden abhängig von den Grunddaten, die zumindest ein zu konfigurierendes Schaltgerät beschreiben, einer oder mehrere dem beschriebenen Schaltgerät zugeordnete Funktionsbausteine aus der Funktionsbaustein-Datenbank ausgewählt und den Programmdaten für das PLC-Programm hinzugefügt.

Die Zusammensetzung der Programmdaten aus vordefinierten Funktionsbausteinen stellt dabei sicher, dass zuverlässig ein funktionsgemäßes PLC-Programm erstellt wird. Die Verwendung von vordefinierten Funktionsbausteinen erleichtert außerdem die Wartung und Aktualisierung der Konfigurationssoftware, da die Funktionsbausteine systematisch überprüft, überarbeitet und aktualisiert werden können.

In den Programmdaten können abhängig von den Grunddaten und insbesondere von darin enthaltenen Informationen über hardwaretechnische Ausgänge des Schaltgeräts für Meldesignale und Steuereingänge für Steuersignale automatisch Eingänge und Ausgärige für das PLC-Programm erzeugt werden. Die Funktionsbausteine werden mit den Eingängen und Ausgängen der Programmdaten automatisch so verknüpft, dass die von dem Schaltgerät gelieferten Signale in der funktionsgemäßen Weise empfangen und verarbeitet werden und dass Steuersignale für das Schaltgerät erzeugt und ausgegeben werden, die die gewünschten Steuerfunktionen realisieren.

Ein in den Programmdaten für das PLC-Programm vorgesehener Eingang oder Ausgang, welcher auch als Softwareeingang bzw. -ausgang bezeichnet werden kann, identifiziert vorzugsweise einen entsprechenden Hardwareeingang bzw. Hardwareausgang der speicherprogrammierbaren Steuerung und/oder bestimmte, über den jeweiligen Hardwareeingang bzw. Hardwareausgang zu übertragende Daten. Die Eingänge und Ausgänge gewährleisten somit, dass die durch das PLC-Programm durchgeführten Datenverarbeitungsschritte auf die richtigen, über die jeweiligen Hardwareeingänge und -ausgänge zu übertragenden Daten angewendet werden.

Vorzugsweise erzeugt die Konfigurationssoftware als Teil der Konfigurationsdaten und insbesondere als Teil der Programmdaten für das PLC-Programm automatisch eine Zuordnung zwischen Hardwareeingängen und Hardwareausgängen der SPS einerseits und Hardwareeingängen und Hardwareausgängen des wenigstens einen durch die SPS überwachten und/oder gesteuerten Steuer- und/oder Schutzgeräts andererseits. Diese Zuordnung gewährleistet, dass die speicherprogrammierbare Steuerung im Falle einer der Zuordnung entsprechenden Verkabelung der SPS mit dem wenigstens einen Schaltgerät die gewünschte Überwachungs- bzw. Steuerfunktionalität bereitstellt. Die Konfigurationssoftware kann Befehle enthalten, um die Zuordnung dem Benutzer als Teil einer Dokumentation zur Verfügung zu stellen, damit der Benutzer ohne Weiteres eine mit dem PLC-Programm konsistente Verkabelung der SPS bzw. des die SPS umfassenden Steuer- und/oder Schutzgeräts vornehmen kann.

Gemäß einer vorteilhaften Ausführungsform ist eine Kommunikationsdatenbank vorgesehen, in der Daten abgelegt sind, mit denen das Steuer- und/oder Schutzgerät zur Kommunikation mit einem oder mehreren außerhalb des Steuer- und/oder Schutzgeräts angeordneten externen Geräten konfigurierbar ist. Mit diesen Daten lässt sich das Steuer- und/oder Schutzgerät dazu konfigurieren, Daten von den externen Geräten zu empfangen und zu interpretieren, und/oder dazu, Daten derart zu erzeugen und auszugeben, dass diese von den externen Geräten empfangen und interpretiert werden können. Die Konfigurationssoftware kann Befehle enthalten, um abhängig von einer Benutzereingabe oder -auswahl Daten aus der Kommunikationsdatenbank auszuwählen und den Konfigurationsdaten für das Steuer- und/oder Schutzgerät hinzuzufügen, wobei die ausgewählten Daten ganz oder teilweise in die Programmdaten für das PLC-Programm übernommen werden können.

Die in der Kommunikationsdatenbank abgelegten Daten können zum Beispiel Informationen über Kommunikationsprotokolle, über mit den externen Geräten auszutauschende Daten und über Adressentypen enthalten, die zur funktionsgemäßen Kommunikation mit den externen Geräten erforderlich sind. Die Information über auszutauschende Informationen kann z.B. Signalbezeichnungen umfassen, mit denen die mit den externen Geräten auszutauschenden Informationssignale oder bestimmte darin enthaltene Daten identifizierbar sind.

Die externen Geräte können beispielsweise ein oder mehrere Steuer- und/oder Schutzgeräte eines anderen Schaltfelds umfassen, ein oder mehrere Messgeräte und/oder eine übergeordnete und mehrere Schaltfelder überwachende Leitwarte. Die Kommunikation kann eine Buskommunikation umfassen.

Die Konfigurationssoftware kann es dem Benutzer ermöglichen, die bereits vorhandenen und vorzugsweise außerhalb der PLC-Programmiersoftware erstellten Programmdaten für das PLC-Programm unter Verwendung der PLC-Programmiersoftware zu verändern. Die Veränderung kann ohne Zwischenschaltung der Konfigurationssoftware durch direkte Verwendung der PLC-Programmiersoftware erfolgen. Die Veränderung kann alternativ oder zusätzlich durch die übrige Konfigurationssoftware steuerbar sein, welche in diesem Fall als Benutzerschnittstelle für die PLC-Programmiersoftware dient. Die PLC-Programmiersoftware kann die übrige Konfigurationssoftware benachrichtigen, wenn eine Änderung der Programmdaten erfolgt ist, um sicherzustellen, dass die übrige Konfigurationssoftware stets weiß, ob die von ihr verwendeten Daten noch aktuell sind.

Die Konfigurationssoftware kann eine Veränderung der Programmdaten nur in einem beschränkten Umfang zulassen, so dass sichergestellt wird, dass stets ein lauffähiges und die gewünschte Funktion erfüllendes PLC-Programm erzeugt wird. Dabei können aus der übrigen Konfigurationssoftware zusätzliche Daten in die PLC-Programmiersoftware geladen werden, welche eine Information über zulässige Veränderungen enthalten. Die ggf. veränderten Programmdaten können von der PLC-Programmiersoftware zurück zu der übrigen Konfigurationssoftware übertragbar sein, insbesondere in dem strukturierten Datenformat.

Die Programmdaten für das PLC-Programm werden dem Benutzer vorzugsweise über eine grafische Benutzerschnittstelle der Konfigurationssoftware grafisch angezeigt, und zwar in einer für gängige PLC-Programmiersprachen üblichen Form, welche insbesondere der EN 61131-3 entsprechen kann. Die grafische Benutzerschnittstelle ermöglicht vorzugsweise auch die vorstehend beschriebene Veränderung der Programmdaten durch den Benutzer.

Gemäß einer vorteilhaften Ausführungsform sind bei der Ausführung der Konfigurationssoftware Daten in die PLC-Programmiersoftware ladbar, welche Informationen über mit externen Geräten auszutauschende Informationen enthalten. Dabei ist es bevorzugt, wenn den Programmdaten für das PLC-Programm durch einen Benutzer unter Verwendung der PLC-Programmiersoftware Verknüpfungen der auszutauschenden Informationen mit logischen Operatoren hinzufügbar sind. Dadurch wird es dem Benutzer ermöglicht, mit externen Geräten auszutauschende Informationen manuell in die Programmdaten für das PLC-Programm derart einzubinden, dass diese geeignet logisch verarbeitet werden. Die in die PLC-Programmiersoftware ladbaren Daten können einen Teil der Programmdaten für das PLC-Programm bilden oder davon getrennt sein. Die Daten sind vorzugsweise als Teil der Programmdaten bzw. gemeinsam mit den Programmdaten in die PLC-Programmiersoftware ladbar, d.h. übertragbar, insbesondere in der vorstehend beschriebenen automatischen Weise.

Die Möglichkeit der manuellen Einbindung von mit externen Geräten auszutauschenden Informationen kann es dem Benutzer z.B. erlauben, übergeordnete Steuer- und/oder Überwachungsregeln für ein Schaltfeld oder eine Schaltanlage zu definieren, die von Informationen abhängig sind, die von externen Geräten geliefert werden. Dies ist vorteilhaft, da sich diese übergeordneten Regeln ggf. nicht unmittelbar aus der hardwaretechnischen Beschreibung eines Schaltfelds ergeben und somit nicht ohne Weiteres automatisch berücksichtigt werden können.

Beispielsweise können durch die speicherprogrammierbare Steuerung ausgelöste Schalthandlungen von Informationen abhängig gemacht werden, welche von externen Geräten übertragen werden. Alternativ oder zusätzlich kann die speicherprogrammierbare Steuerung durch die logischen Verknüpfungen dazu eingerichtet werden, Daten zu erzeugen und auszugeben, die von externen Geräten empfangen und zur Realisierung der übergeordneten Steuer- und/oder Überwachungsregeln verwendet werden.

Die in die PLC-Programmiersoftware ladbaren Daten sind vorzugsweise aus der vorstehend beschriebenen Kommunikationsdatenbank ausgewählt und zu den Konfigurationsdaten, insbesondere zu den Programmdaten für das PLC-Programm, hinzugefügt worden. Die Daten können z.B. Signalbezeichnungen von mit externen Geräten auszutauschenden Informationssignalen enthalten.

Der Benutzer hat zur Erstellung der logischen Verknüpfungen vorzugsweise die Möglichkeit, in der PLC-Programmiersoftware die entsprechenden auszutauschenden Informationen anhand der in die PLC-Programmiersoftware geladenen Daten zu identifizieren, z.B. durch Auswahl einer entsprechenden Signalbezeichnung aus einer Liste, woraufhin vorzugsweise ein entsprechender Eingang bzw. Ausgang in den Programmdaten erzeugt und mit den auszutauschenden Informationen verknüpft wird. Dann hat der Benutzer die Möglichkeit, die auszutauschenden Informationen mit logischen Operatoren zu verknüpfen und dadurch in das Programm einzubinden, insbesondere durch Verwendung der vorstehend beschriebenen grafischen Benutzeroberfläche. Die auszutauschenden Informationen können direkt oder indirekt mit den zur Überwachung und Steuerung der Schaltgeräte vorgesehenen Bestandteilen des Verarbeitungs- bzw. Logikteils der Programmdaten und insbesondere mit den dazu vorgesehenen Funktionsbausteinen verknüpft werden.

Gemäß einer Ausführungsform sind bei der Ausführung der Konfigurationssoftware bereits eingegebene oder ausgewählte Grunddaten, Konfigurationsdaten oder davon abgeleitete Daten in standardisierter Form, z.B. in einem XML-Format, exportierbar, dokumentierbar und/oder sicherbar. Bei der Ausführung der Konfigurationssoftware können außerdem einzugebende oder auszuwählende Grunddaten oder Konfigurationsdaten in standardisierter Form, zum Beispiel in einem XML-Format, importierbar sein. Die Dokumentation kann zum Beispiel die vorstehend beschriebene Zuordnung zwischen Hardwareeingängen und -ausgängen der speicherprogrammierbaren Steuerung einerseits und Hardwareeingängen und - ausgängen des wenigstens einen Schaltgeräts andererseits umfassen, wobei diese Zuordnung z.B. als grafischer Verdrahtungsplan dargestellt sein kann.

Weiterer Gegenstand der Erfindung ist ein Verfahren zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für zumindest ein Schaltgerät für die Mittel- oder Hochspannungstechnik, bei dem eine Konfigurationssoftware verwendet wird, in die eine PLC-Programmiersoftware zur Programmierung einer speicherprogrammierbaren Steuerung integriert ist.

Das Verfahren kann unter Verwendung einer Konfigurationssoftware gemäß der vorliegenden Beschreibung durchgeführt werden. Die in der vorliegenden Beschreibung in Bezug auf die Konfigurationssoftware und deren Verwendung beschriebenen Vorteile und vorteilhaften Ausführungsformen stellen entsprechende Vorteile und vorteilhafte Ausführungsformen des Verfahrens dar. Wie vorstehend in Bezug auf die Konfigurationssoftware beschrieben, wird durch das Verfahren die Bereitstellung eines Steuer- und/oder Schutzgeräts, welches Steuer- und/oder Überwachungsfunktionen für ein spezielles Schaltfeld mit zumindest einem Schaltgerät bereitstellt, erheblich erleichtert.

Gemäß einer vorteilhaften Ausführungsform umfasst das Verfahren, dass
- eine Benutzereingabe zum Eingeben oder Auswählen von Grunddaten empfangen wird, die wenigstens ein zu konfigurierendes Schaltgerät beschreiben,
- Programmdaten für das PLC-Programm in Abhängigkeit von den eingegebenen oder ausgewählten Grunddaten erzeugt werden, und
- ein PLC-Programm in der PLC-Programmiersoftware unter Verwendung der Programmdaten erzeugt wird.

Eine weitere Ausführungsform sieht vor, dass, insbesondere auf eine Benutzereingabe hin, automatisch folgende Schritte durchgeführt werden:
- Starten der PLC-Programmiersoftware,
- Übermitteln von Programmdaten für das PLC-Programm an die PLC-Programmiersoftware ,
- Erstellen eines PLC-Programms für das wenigstens eine Steuer- und/oder Schutzgerät in der PLC-Programmiersoftware unter Verwendung der Programmdaten, und
- Empfangen des PLC-Programms von der PLC-Programmiersoftware.

Gemäß einer weiteren Ausführungsform wird zur Eingabe oder Auswahl von Grunddaten, die ein zu konfigurierendes Schaltgerät beschreiben, ein vordefiniertes Schaltgerät aus einer Bibliothek ausgewählt, in der verschiedene vordefinierte Schaltgeräte und den vordefinierten Schaltgeräten zugeordnete vordefinierte Grunddaten enthalten sind, die das jeweilige Schaltgerät beschreiben, wobei die in der Bibliothek enthaltenen und dem ausgewählten Schaltgerät zugeordneten vordefinierten Grunddaten für die weitere Konfiguration verwendet werden.

Vorzugsweise werden die in der Bibliothek enthaltenen vordefinierten Schaltgeräte auf einer grafischen Benutzeroberfläche grafisch dargestellt und von einem Benutzer anhand der jeweiligen grafischen Darstellung ausgewählt. Zur grafischen Darstellung der Schaltgeräte werden vorzugsweise in der Bibliothek enthaltene grafische Ersatzschaltbilder der Schaltgeräte angezeigt.

Eine weitere Ausführungsform des Verfahrens sieht vor, dass zum Erstellen von Programmdaten für das PLC-Programm ein oder mehrere Funktionsbausteine aus einer Funktionsbaustein-Datenbank ausgewählt werden, in der verschiedene vordefinierte Funktionsbausteine für das PLC-Programm zur Implementierung von Steuerfunktionen, Meldefunktionen und/oder Verriegelungsfunktionen für verschiedene Schaltgeräte enthalten sind.

Gemäß einer weiteren Ausführungsform werden Informationen über mit externen Geräten auszutauschende Informationen in die PLC-Programmiersoftware geladen und werden vorhandenen Programmdaten für das PLC-Programm unter Verwendung PLC-Programmiersoftware durch einen Benutzer Verknüpfungen der auszutauschenden Informationen mit logischen Operatoren hinzugefügt.

Es versteht sich, dass die erfindungsgemäße Konfigurationssoftware auf einem beliebigen Datenträger gespeichert werden kann.

Nachfolgend wird die vorliegende Erfindung anhand einer beispielhaften Ausführungsform unter Bezugnahme auf die beigefügten Figuren beschrieben. Es zeigen:
- Fig. 1: eine Konfigurationssoftware gemäß einer Ausführungsform der Erfindung in schematischer Darstellung,
- Fig. 2: ein Verfahren gemäß einer Ausführungsform der Erfindung in einer Flussdiagrammdarstellung, und
- Fig. 3: die Konfigurationssoftware von Fig. 1 in einer weiteren schematischen Darstellung.

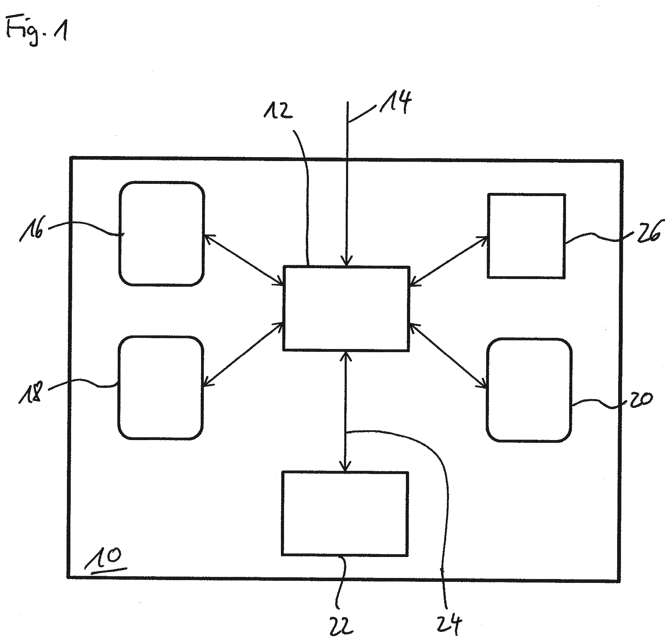

Fig. 1 zeigt eine Konfigurationssoftware 10 zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für zumindest ein Schaltgerät für die Mittel- oder Hochspannungstechnik in einer funktionsorientierten schematischen Darstellung.

Die Software 10 umfasst ein Konfigurator-Programm 12 mit einer Schnittstelle 14, über die von einem Benutzer Grunddaten eingegeben oder ausgewählt werden können, die wenigstens ein zu konfigurierendes Schaltgerät beschreiben. Die Schnittstelle 14 umfasst eine grafische Benutzeroberfläche des Konfigurator-Programms 12 für die Benutzerinteraktion. Die Software 10 umfasst ferner eine HMI-Bibliothek 16, eine Funktionsbaustein-Datenbank 18 und eine Kommunikationsdatenbank 20, die jeweils an das Konfigurator-Programm 12 angebunden sind.

In die Konfigurationssoftware 10 ist eine PLC-Programmiersoftware 22 integriert, welche durch ein PLC-Programmierprogramm gebildet ist und mit dem Konfigurator-Programm 12 über eine Schnittstelle 24 zum Datenaustausch verbunden ist.

Außerdem umfasst die Software 10 ein an das Konfigurator-Programm 12 angegliedertes Import/Export-Modul 26, mit dem Daten aus dem Konfigurator-Programm 12 exportierbar und in das Konfigurator-Programm 12 importierbar sind.

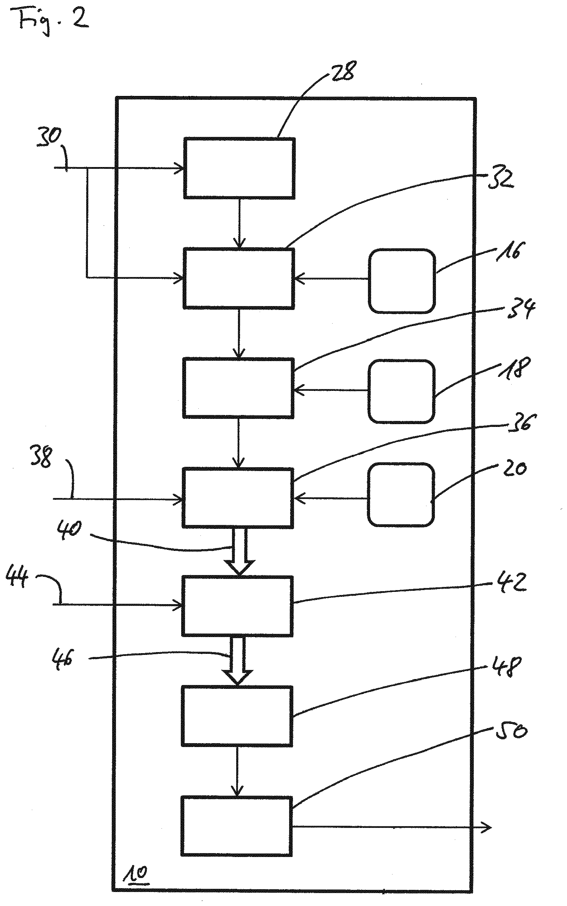

Fig. 2 zeigt ein Flussdiagramm eines Verfahrens zum Erstellen von Konfigurationsdaten und eines PLC-Programms unter Verwendung der in Fig. 1 gezeigten Konfigurationssoftware 10.

In dem Schritt 28 wird durch eine Benutzereingabe 30 ein Projekt angelegt. Dem Projekt können im Verlauf des Verfahrens ein oder mehrere Schaltanlagen zugeordnet werden. In dem Schritt 28 werden vom Benutzer außerdem Grunddaten eingegeben, welche eine gesamte Schaltanlage einschließlich aller Schaltfelder und Schaltgeräte der Schaltanlage betreffen, wie zum Beispiel eine Primärspannung der Schaltanlage oder der Typ der Isolierung der Schaltanlage.

In dem Schritt 32 werden durch eine weitere Benutzereingabe 30 ein oder mehrere Schaltfelder für die Schaltanlage mit jeweils einem oder mehreren Schaltgeräten definiert. Zur Definition eines Schaltfelds werden jeweils zuerst Grunddaten eingegeben oder ausgewählt, welche das Schaltfeld insgesamt beschreiben, wie zum Beispiel die Eigenschaft des Schaltfelds als Einspeisefeld, Abgangsfeld oder Kupplungsfeld.

Danach werden durch eine Benutzereingabe 30 ein oder mehrere Schaltgeräte ausgewählt, welche in der HMI-Bibliothek 16 vordefiniert sind und welche dem Benutzer vorzugsweise in Abhängigkeit von den zuvor bereits eingegebenen Grunddaten derart zur Auswahl gestellt werden, dass nur funktionsfähig realisierbare Schaltfelder spezifiziert werden können. Die HMI-Bibliothek 16 umfasst dazu Informationen über zulässige Schaltanlagen-, Schaltfeld- und Schaltgerätekonfigurationen. Auf die Auswahl eines Schaltgeräts hin wird den Konfigurationsdaten automatisch das jeweilige Schaltgerät mit den für dieses Schaltgerät in der HMI-Bibliothek 16 vordefinierten Grunddaten hinzugefügt. Die vordefinierten Grunddaten umfassen z.B. Informationen bezüglich Hilfsschaltern, Hilfskontakten, Einschaltauslösen, Ausschaltauslösern und Motorantrieben der jeweiligen Schaltgeräte.

Daraufhin werden in dem Schritt 34 abhängig von den eingegebenen bzw. ausgewählten Grunddaten automatisch Programmdaten für das zu erstellende PLC-Programm erzeugt. Dabei werden aus der Funktionsbaustein-Datenbank 18 automatisch Funktionsbausteine für das PLC-Programm ausgewählt und den Programmdaten hinzugefügt, die den jeweils spezifizierten Schaltgeräten zugeordnet sind. Ferner werden automatisch Eingänge und Ausgänge erzeugt und die Eingänge, Ausgänge und Funktionsbausteine werden automatisch durch Verbindungen miteinander verknüpft, so dass die Programmdaten zu einem PLC-Programm führen, welches die für das jeweilige Schaltfeld notwendigen und durch die SPS durchzuführenden Steuer- und/oder Überwachungsfunktionen implementiert.

Daraufhin werden in dem Schritt 36 Konfigurationsdaten für die Kommunikation des Steuer- und/oder Schutzgeräts mit externen Geräten erzeugt. Der Benutzer wählt dazu durch eine Benutzereingabe 38 entsprechende Daten aus der Kommunikationsdatenbank 20 aus, die den Konfigurationsdaten hinzugefügt werden.

Die vorstehend beschriebenen Schritte 28 bis 38 können von dem Konfigurator-Programm durchgeführt werden, ohne dass eine Interaktion mit der PLC-Programmiersoftware notwendig ist. Die vorstehend beschriebenen Benutzereingaben 30, 38 erfolgen dabei unter Verwendung der grafischen Benutzeroberfläche des Konfigurator-Programms.

Anschließend werden in dem Schritt 40 die erzeugten Konfigurationsdaten einschließlich der Programmdaten für das PLC-Programm und der Konfigurationsdaten für die Gerätekommunikation auf eine Benutzereingabe in dem Konfigurator-Programm hin von dem Konfigurator-Programm in die PLC-Programmiersoftware portiert. Daraufhin werden in dem Schritt 42 die portierten Programmdaten unter Verwendung der PLC-Programmiersoftware durch eine Benutzereingabe 44 ergänzt. Diese Ergänzung kann dazu dienen, übergeordnete Steuer- und Überwachungsregeln zu implementieren. Dazu können in den Programmdaten die von der speicherprogrammierbaren Steuerung durchzuführenden Steuervorgänge von Informationen abhängig gemacht werden, die von externen Geräten an das Steuer- und/oder Schutzgerät gesendet werden.

Der Benutzer kann dabei durch die Benutzereingabe 44 Signalbezeichnungen auswählen, die zuvor als Teil der Konfigurationsdaten für die Gerätekommunikation erzeugt wurden und die mit den externen Geräten auszutauschende Informationssignale bezeichnen. In den Programmdaten werden abhängig davon Eingänge und Ausgänge für die externen Informationen erzeugt, welche von dem Benutzer durch die Benutzereingabe 44 mit logischen Operatoren verknüpft werden können, um die gewünschten Abhängigkeiten zu implementieren. In dem Schritt 42 erfolgt außerdem die Erzeugung des PLC-Programms aus den ergänzten Programmdaten, insbesondere durch Kompilieren. Die Benutzereingabe 44 kann unter Verwendung einer grafischen Benutzeroberfläche der PLC-Programmiersoftware erfolgen.

Die PLC-Programmiersoftware kann das Konfigurator-Programm benachrichtigen, wenn eine Änderung der Programmdaten erfolgt ist, so dass das Konfigurator-Programm stets weiß, ob die von dem Konfigurator-Programm verwendeten Programmdaten noch aktuell sind.

In dem Schritt 46 werden die ergänzten Programmdaten und/oder das kompilierte PLC-Programm zurück in das Konfigurator-Programm portiert. In dem Schritt 48 kann durch eine entsprechende Benutzereingabe in der grafischen Benutzeroberfläche des Konfigurator-Programms ein Kopieren eines oder mehrerer Schaltfelder und/oder einer oder mehrerer Schaltanlagen einschließlich der zugehörigen Konfigurationsdaten und/oder eines bereits kompilierten PLC-Programms für die speicherprogrammierbare Steuerung des zu kopierenden Schaltfelds erfolgen. Prinzipiell kann ein Kopieren eines Schaltfelds oder einer Schaltanlage auch bereits vor dem Portieren der Daten in die PLC-Programmiersoftware erfolgen, in welchem Fall die dem jeweiligen Schaltfeld und/oder der jeweiligen Schaltanlage zugeordneten Grunddaten kopiert werden.

In dem Schritt 50 erfolgt die Ausgabe des fertig kompilierten PLC-Programms durch das Konfigurator-Programm. Das PLC-Programm kann dabei direkt in die speicherprogrammierbare Steuerung geladen werden. Ebenso kann das PLC-Programm auf einem Datenträger gespeichert werden, der in die speicherprogrammierbare Steuerung einsetzbar ist.

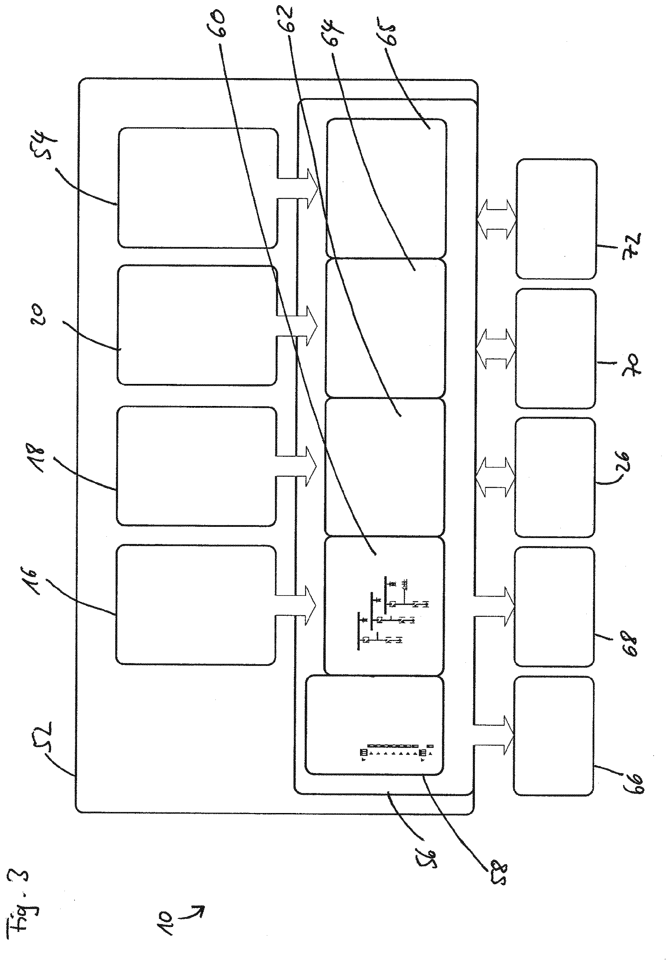

Fig. 3 zeigt die Konfigurationssoftware 10 von Fig. 1 in einer speicherorientierten schematischen Darstellung. Die Konfigurationssoftware 10 umfasst einen Speicherbereich 52, in dem die HMI-Bibliothek 16, die Funktionsbaustein-Datenbank 18, die Kommunikationsdatenbank 20 und zusätzlich eine Hardware-Bibliothek 54 enthalten sind. Ferner umfasst der Speicherbereich 52 einen Projekt-Speicherbereich 56, in dem ein bestimmtes Projekt betreffende Konfigurationsdaten gespeichert sind.

Die in dem Speicherbereich 52 gespeicherten Daten umfassen einen Speicherbereich 58 für eine Projekt-Baumstruktur, in der die hierarchische Projektstruktur mit den zugehörigen Schaltanlagen, Schaltfeldern und Schaltgeräten abgelegt ist. In einem weiteren Speicherbereich 60 sind die von dem Benutzer eingegebenen und/oder unter Verwendung der HMI-Bibliothek 16 ausgewählten Grunddaten enthalten, die die Schaltanlagen, Schaltfelder und Schaltgeräte beschreiben. In einem weiteren Speicherbereich 62 sind die aus den Grunddaten unter Verwendung der Funktionsbaustein-Datenbank 18 erzeugten Programmdaten abgelegt.

In dem Speicherbereich 64 sind die von einem Benutzer unter Verwendung der Kommunikationsdatenbank 20 ausgewählten Konfigurationsdaten für die Kommunikation der den verschiedenen Schaltfeldern zugeordneten Steuer- und/oder Schutzgeräte mit externen Geräten abgelegt.

In dem Speicherbereich 65 sind allgemeine Einstellungen abgelegt, die aus der Hardware-Bibliothek 54 ausgewählt worden sind.

Unterhalb des Speicherbereichs 52 sind Programmmodule der Software 10 dargestellt, welche ein Programmmodul 66 zur Kommunikation der Software 10 mit der speicherprogrammierbaren Steuerung oder einem Datenträger zur Programmierung der speicherprogrammierbaren Steuerung, ein Programmmodul 68 zur Erstellung einer Dokumentation für das Projekt, insbesondere mit einer oder mehreren PDF-Dateien, ein Programmmodul 26 zum Import und/oder Export von Daten in einem strukturierten Datenformat wie zum Beispiel einem XML-Format, ein Programmmodul 70 zur Sicherung der Daten des Projekts, zum Beispiel als ZIP-Datei, und ein Programmmodul 72 für Servicefunktionen umfasst.

### Bezugszeichenliste

- 10: Konfigurationssoftware
- 12: Konfigurator-Programm
- 14: Schnittstelle für Benutzereingabe
- 16: HMI-Bibliothek
- 18: Funktionsbaustein-Datenbank
- 20: Kommunikationsdatenbank
- 22: PLC-Programmiersoftware
- 24: Schnittstelle für Datenaustausch
- 26: Programmmodul für Datenimport/-export
- 28: Anlegen eines Projekts
- 30: Benutzereingabe
- 32: Definieren wenigstens eines Schaltfelds
- 34: Erzeugen von Programmdaten
- 36: Erzeugen von Konfigurationsdaten für Gerätekommunikation
- 38: Benutzereingabe
- 40: Datenportierung
- 42: Ergänzen der Programmdaten, Kompilieren des PLC-Programms
- 44: Benutzereingabe
- 46: Datenportierung
- 48: Kopieren von Schaltgeräten, Schaltfeldern, Schaltanlagen
- 50: Ausgabe PLC-Programm
- 52: Speicherbereich für die Konfigurationssoftware
- 54: Hardware-Bibliothek
- 56: Projekt-Speicherbereich
- 58: Speicherbereich für Projekt-Baumstruktur
- 60: Speicherbereich für Grunddaten
- 62: Speicherbereich für Programmdaten
- 64: Speicherbereich für Konfigurationsdaten für Gerätekommunikation
- 65: Speicherbereich für allgemeine Einstellungen
- 66: Programmmodul für die SPS-Programmierung
- 68: Programmmodul für Dokumentation
- 70: Programmmodul für Datensicherung
- 72: Programmmodul für Servicefunktionen

## Patentansprüche

1. Konfigurationssoftware (10), angepasst zur Durchführung des Verfahrens nach Anspruch 12, zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für zumindest ein Schaltgerät für die Mittel- oder Hochspannungstechnik,
wobei in die Konfigurationssoftware eine PLC-Programmiersoftware (22) zur Programmierung einer speicherprogrammierbaren Steuerung integriert ist und die Konfigurationssoftware (10) Befehle umfasst, um Daten in einem strukturierten Datenformat mit der PLC-Programmiersoftware (22) auszutauschen.

2. Software nach Anspruch 1,
**dadurch gekennzeichnet, dass**
die Konfigurationssoftware (10) Befehle zur Durchführung eines Konfigurationsverfahrens umfasst, welches die Schritte umfasst:
- Empfangen einer Benutzereingabe (30) zum Eingeben oder Auswählen von Grunddaten, die wenigstens ein zu konfigurierendes Schaltgerät beschreiben,
- Erzeugen von Programmdaten für das PLC-Programm in Abhängigkeit von den eingegebenen oder ausgewählten Grunddaten, und
- Erstellen eines PLC-Programms für das wenigstens eine Steuer- und/oder Schutzgerät in der PLC-Programmiersoftware (22) unter Verwendung der Programmdaten.

3. Software nach zumindest einem der vorstehenden Ansprüche,
**dadurch gekennzeichnet, dass**
eine Bibliothek (16) vorgesehen ist, in der verschiedene vordefinierte Schaltgeräte und den vordefinierten Schaltgeräten zugeordnete vordefinierte Grunddaten enthalten sind, die das jeweilige Schaltgerät beschreiben, und dass bei der Ausführung der Konfigurationssoftware (10) zur Eingabe oder Auswahl von Grunddaten vorzugsweise zumindest ein vordefiniertes Schaltgerät aus der Bibliothek (16) durch einen Benutzer auswählbar ist und die in der Bibliothek (16) enthaltenen und dem ausgewählten Schaltgerät zugeordneten vordefinierten Grunddaten für die weitere Konfiguration verwendbar sind.

4. Software nach Anspruch 3,
**dadurch gekennzeichnet, dass**
die Konfigurationssoftware (10) Befehle enthält, um die in der Bibliothek (16) enthaltenen vordefinierten Schaltgeräte auf einer grafischen Benutzeroberfläche derart grafisch darzustellen, dass diese von einem Benutzer anhand der jeweiligen grafischen Darstellung auswählbar sind, wobei zur grafischen Darstellung der Schaltgeräte vorzugsweise in der Bibliothek (16) enthaltene grafische Ersatzschaltbilder der Schaltgeräte angezeigt werden.

5. Software nach zumindest einem der vorstehenden Ansprüche,
**dadurch gekennzeichnet, dass**
bei der Ausführung der Konfigurationssoftware (10) Grunddaten durch einen Benutzer eingebbar oder auswählbar sind, die ein Schaltfeld mit ein oder mehreren Schaltgeräten oder eine mehrere Schaltfelder mit jeweils einem oder mehreren Schaltgeräten umfassende Schaltanlage beschreiben.

6. Software nach zumindest einem der vorstehenden Ansprüche,
**dadurch gekennzeichnet, dass**
bei der Ausführung der Konfigurationssoftware (10) zur Eingabe oder Auswahl von Grunddaten, die zumindest ein Schaltgerät beschreiben, ein oder mehrere Schaltgeräte, Schaltfelder und/oder Schaltanlagen, zu denen bereits Grunddaten eingegeben oder ausgewählt wurden einzeln oder gruppenweise durch einen Benutzer auswählbar und einschließlich der zugehörigen Grunddaten kopierbar sind.

7. Software nach zumindest einem der vorstehenden Ansprüche,
**dadurch gekennzeichnet, dass**
eine Funktionsbaustein-Datenbank (18) vorgesehen ist, in der verschiedene vordefinierte Funktionsbausteine für das PLC-Programm zur Implementierung von Steuerfunktionen, Meldefunktionen und/oder Verriegelungsfunktionen für verschiedene Schaltgeräte enthalten sind.

8. Software nach zumindest einem der vorstehenden Ansprüche,
**dadurch gekennzeichnet, dass**
eine Kommunikationsdatenbank (20) vorgesehen ist, in der Daten abgelegt sind, mit denen das Steuer- und/oder Schutzgerät zur Kommunikation mit einem oder mehreren außerhalb des Steuer- und/oder Schutzgeräts angeordneten externen Geräten konfigurierbar ist, wobei die Daten vorzugsweise Informationen über Kommunikationsprotokolle, über mit den externen Geräten auszutauschende Informationen und über Adressentypen zur Kommunikation mit den externen Geräten umfassen.

9. Software nach zumindest einem der vorstehenden Ansprüche,
**dadurch gekennzeichnet, dass**
bei der Ausführung der Konfigurationssoftware (10) Daten, die Informationen über mit externen Geräten auszutauschende Informationen enthalten, in die PLC-Programmiersoftware (22) ladbar sind, wobei vorhandenen Programmdaten für das PLC-Programm durch einen Benutzer unter Verwendung der PLC-Programmiersoftware (22) Verknüpfungen der auszutauschenden Informationen mit logischen Operatoren hinzufügbar sind.

10. Software nach zumindest einem der vorstehenden Ansprüche,
**dadurch gekennzeichnet, dass**
bei der Ausführung der Konfigurationssoftware (10) bereits eingegebene oder ausgewählte Grunddaten, Konfigurationsdaten oder davon abgeleitete Daten in standardisierter Form exportierbar, dokumentierbar und/oder sicherbar sind.

11. Software nach zumindest einem der vorstehenden Ansprüche,
**dadurch gekennzeichnet, dass**
bei der Ausführung der Konfigurationssoftware (10) einzugebende oder auszuwählende Grunddaten oder Konfigurationsdaten in standardisierter Form importierbar sind.

12. Verfahren zum Erstellen von Konfigurationsdaten und eines PLC-Programms für zumindest ein eine speicherprogrammierbare Steuerung umfassendes Steuer- und/oder Schutzgerät zum Überwachen und/oder Steuern wenigstens einer Antriebskomponente für zumindest ein Schaltgerät für die Mittel- oder Hochspannungstechnik, bei dem
eine Konfigurationssoftware (10) verwendet wird, in die eine PLC-Programmiersoftware (22) zur Programmierung einer speicherprogrammierbaren Steuerung integriert ist,
wobei die Konfigurationssoftware (10) ein Konfigurator-Programm (12) umfasst, das die PLC-Programmiersoftware (22) steuert und/oder das Daten von der PLC-Programmiersoftware (22) empfängt, und das dadurch zumindest einen der folgenden Schritte automatisch durchführt:
- Starten und/oder Beenden der PLC-Programmiersoftware (22) und/oder einer Benutzeroberfläche der PLC-Programmiersoftware (22),
- Übermitteln von Programmdaten für das PLC-Programm von dem Konfigurator-Programm (12) an die PLC-Programmiersoftware,
- Erstellen eines PLC-Programms für das wenigstens eine Steuer- und/oder Schutzgerät in der PLC-Programmiersoftware (22) unter Verwendung von von dem Konfigurator-Programm (12) an die PLC-Programmiersoftware (22) übermittelten Programmdaten für das PLC-Programm, und
- Empfangen eines von der PLC-Programmiersoftware (22) übermittelten PLC-Programms für das wenigstens eine Steuer- und/oder Schutzgerät und/oder von von der PLC-Programmiersoftware (22) übermittelten Programmdaten für das PLC-Programm.

13. Verfahren nach Anspruch 12,
**dadurch gekennzeichnet, dass**
zur Eingabe oder Auswahl von Grunddaten, die ein zu konfigurierendes Schaltgerät beschreiben, ein vordefiniertes Schaltgerät aus einer Bibliothek (16) ausgewählt wird, in der verschiedene vordefinierte Schaltgeräte und den vordefinierten Schaltgeräten zugeordnete vordefinierte Grunddaten enthalten sind, die das jeweilige Schaltgerät beschreiben, wobei die in der Bibliothek (16) enthaltenen und dem ausgewählten Schaltgerät zugeordneten vordefinierten Grunddaten für die weitere Konfiguration verwendet werden.

14. Verfahren nach einem der Ansprüche 12 oder 13,
**dadurch gekennzeichnet, dass**
zum Erstellen von Programmdaten für das PLC-Programm ein oder mehrere Funktidnsbausteine aus einer Funktionsbaustein-Datenbank (18) ausgewählt werden, in der verschiedene vordefinierte Funktionsbausteine für das PLC-Programm zur Implementierung von Steuerfunktionen, Meldefunktionen und/oder Verriegelungsfunktionen für verschiedene Schaltgeräte enthalten sind.

15. Verfahren nach einem der Ansprüche 12, 13 oder 14,
**dadurch gekennzeichnet , dass**
Informationen über mit externen Geräten auszutauschende Informationen in die PLC-Programmiersoftware (22) geladen werden und vorhandenen Programmdaten für das PLC-Programm durch einen Benutzer unter Verwendung der PLC-Programmiersoftware (22) Verknüpfungen der auszutauschenden Informationen mit logischen Operatoren hinzugefügt werden.

16. Verfahren nach einem der Ansprüche 12 - 15,
**dadurch gekennzeichnet, dass**
- eine Benutzereingabe (30) zum Eingeben oder Auswählen von Grunddaten empfangen wird, die wenigstens ein zu konfigurierendes Schaltgerät beschreiben,
- Programmdaten für das PLC-Programm in Abhängigkeit von den eingegebenen oder ausgewählten Grunddaten erzeugt werden,
- ein PLC-Programm für das Steuer- und/oder Schutzgerät in der PLC-Programmiersoftware (22) unter Verwendung der Programmdaten erzeugt wird.

## Claims

1. Configuration software (10), adapted to carry out the method in accordance with claim 12, for preparing configuration data and a PLC program for at least one control device and/or protective device, comprising a programmable logic controller, for monitoring and/or controlling at least one drive component for at least one switching device for medium-voltage technology or high-voltage technology, wherein PLC programming software (22) for programming a programmable logic controller is integrated in the configuration software and the configuration software (10) comprises commands to exchange data in a structured data format with the PLC programming software (22).

2. Software in accordance with claim 1,
**characterized in that**
the configuration software (10) comprises commands for carrying out a configuration process which comprises the steps:
- receiving a user input (30) for inputting or selecting basic data which describe at least one switching device to be configured,
- generating program data for the PLC program in dependence on the input or selected basic data and
- preparing a PLC program for the at least one control device and/or protective device in the PLC programming software (22) using the program data.

3. Software in accordance with at least one of the preceding claims,
**characterized in that**
a library (16) is provided in which different predefined switching devices and predefined basic data associated with the predefined switching devices and describing the respective switching device are contained; and **in that**, on the execution of the configuration software (10), preferably at least one predefined switching device can be selected from the library (16) by a user to input or select basic data and the predefined basic data contained in the library (16) and associated with the selected switching device can be used for the further configuration.

4. Software in accordance with claim 3,
**characterized in that**
the configuration software (10) contains commands to graphically represent the predefined switching devices contained in the library (16) on a graphical user interface in such a manner that said predefined switching devices can be selected by a user based on the respective graphical representation, with graphical equivalent circuit diagrams of the switching devices contained in the library (16) preferably being displayed to graphically represent the switching devices.

5. Software in accordance with at least one of the preceding claims,
**characterized in that**,
on the execution of the configuration software (10), basic data can be input or selected by a user, said basic data describing a switch panel comprising one or more switching devices or describing switchgear comprising a plurality of switch panels each having one or more switching devices.

6. Software in accordance with at least one of the preceding claims,
**characterized in that**,
on the execution of the configuration software (10), one or more switching devices, switch panels and/or switchgear assemblies with respect to which basic data have already been input or selected can be selected individually or group-wise by a user and can be copied, including the associated basic data, to input or select basic data which describe at least one switching device.

7. Software in accordance with at least one of the preceding claims,
**characterized in that**
a functional module database (18) is provided in which different predefined functional modules for the PLC program for implementing control functions, signaling functions and/or locking functions for different switching devices are contained.

8. Software in accordance with at least one of the preceding claims,
**characterized in that**
a communication database (20) is provided in which data are stored with which the control device and/or protective device can be configured for communication with one or more external devices arranged outside the control device and/or protective device, with the data preferably comprising information on communication protocols, on information to be exchanged with the external devices and on address types for communication with the external devices.

9. Software in accordance with at least one of the preceding claims,
**characterized in that**,
on the execution of the configuration software (10), data which contain information on information to be exchanged with external devices can be loaded in the PLC programming software (22), with links of the information to be exchanged with logical operators being able to be added to existing program data for the PLC program by a user using the PLC programming software (22).

10. Software in accordance with at least one of the preceding claims,
**characterized in that**,
on the execution of the configuration software (10), already input or selected basic data, configuration data or data derived therefrom can be exported, documented and/or backed up in a standardized form.

11. Software in accordance with at least one of the preceding claims,
**characterized in that**,
on the execution of the configuration software (10), basic data or configuration data to be input or to be selected can be imported in a standardized form.

12. A method of preparing configuration data and a PLC program for at least one control device and/or protective device, comprising a programmable logic controller, for monitoring and/or controlling at least one drive component for at least one switching device for medium-voltage technology or high-voltage technology, in which configuration software (10) is used in which PLC programming software (22) for programming a programmable logic controller is integrated,
wherein the configuration software (10) comprises a configurator program (12) which controls the PLC programming software (22) and/or which receives data from the PLC programming software (22) and which thereby automatically carries out at least one of the following steps:
- starting and/or terminating the PLC programming software (22) and/or a user interface of the PLC programming software (22),
- transmitting program data for the PLC program from the configurator program (12) to the PLC programming software,
- preparing a PLC program for the at least one control device and/or protective device in the PLC programming software (22) using program data for the PLC program transmitted from the configurator program (12) to the PLC programming software (22) and
- receiving a PLC program for the at least one control device and/or protective device transmitted by the PLC programming software (22) and/or receiving program data for the PLC program transmitted by the PLC programming software (22).

13. A method in accordance with claim 12,
**characterized in that**,
to input or select basic data which describe a switching device to be configured, a predefined switching device is selected from a library (16) in which different predefined switching devices and predefined basic data associated with the predefined switching devices and describing the respective switching device are contained, with the predefined basic data contained in the library (16) and associated with the selected switching device being used for the further configuration.

14. A method in accordance with one of the claims 12 or 13, **characterized in that**,
to prepare program data for the PLC program, one or more functional modules are selected from a functional module database (18) in which different predefined functional modules for the PLC program for implementing control functions, signaling functions and/or locking functions for different switching devices are contained.

15. A method in accordance with any one of the claims 12, 13 or 14,
**characterized in that**
information on information to be exchanged with external devices is loaded in the PLC programming software (22) and links of the information to be exchanged with logical operators are added to existing program data for the PLC program by a user using the PLC programming software (22).

16. A method in accordance with any one of the claims 12 to 15,
**characterized in that**
- a user input (30) for inputting or selecting basic data which describe at least one switching device to be configured is received,
- program data for the PLC program are generated in dependence on the input or selected basic data and
- a PLC program for the control device and/or protective device is created in the PLC programming software (22) using the program data.

## Revendications

1. Logiciel de configuration (10), adapté à mettre en œuvre le procédé selon la revendication 12, pour créer des données de configuration et un programme d'API pour au moins un appareil de commande et/ou de protection comprenant un automate programmable industriel pour surveiller et/ou commander au moins un composant d'entraînement pour au moins un appareil de commutation pour la technique moyenne ou haute tension,
un logiciel de programmation d'API (22) pour programmer un automate programmable industriel étant intégré dans le logiciel de configuration et le logiciel de configuration (10) comprenant des instructions pour échanger des données dans un format de données structuré avec le logiciel de programmation d'API (22).

2. Logiciel selon la revendication 1,
**caractérisé en ce**
**que** le logiciel de configuration (10) comprend des instructions pour mettre en œuvre un procédé de configuration qui comprend les étapes suivantes :
- réception d'une entrée utilisateur (30) pour entrer ou sélectionner des données de base qui décrivent au moins un appareil de commutation à configurer,
- génération de données de programme pour le programme d'API en fonction des données de base entrées ou sélectionnées et
- création d'un programme d'API pour ledit au moins un appareil de commande et/ou de protection dans le logiciel de programmation d'API (22) en utilisant les données de programme.

3. Logiciel selon au moins l'une des revendications précédentes,
**caractérisé en ce**
**qu'**il est prévu une bibliothèque (16) dans laquelle sont contenus différents appareils de commutation prédéfinis et des données de base prédéfinies associées aux appareils de commutation prédéfinis, qui décrivent l'appareil de commutation respectif, et que, lors de l'exécution du logiciel de configuration (10) pour entrer ou sélectionner des données de base, de préférence au moins un appareil de commutation prédéfini peut être sélectionné dans la bibliothèque (16) par un utilisateur et les données de base prédéfinies contenues dans la bibliothèque (16) et associées à l'appareil de commutation sélectionné peuvent être utilisées pour la suite de la configuration.

4. Logiciel selon la revendication 3,
**caractérisé en ce**
**que** le logiciel de configuration (10) contient des instructions pour représenter graphiquement les appareils de commutation prédéfinis contenus dans la bibliothèque (16) sur une interface utilisateur graphique de telle sorte que ceux-ci puissent être sélectionnés par un utilisateur à l'aide de la représentation graphique respective, des schémas de circuit équivalents graphiques des appareils de commutation contenus de préférence dans la bibliothèque (16) étant affichés pour représenter graphiquement les appareils de commutation.

5. Logiciel selon au moins l'une des revendications précédentes,
**caractérisé en ce**
**que**, lors de l'exécution du logiciel de configuration (10), des données de base peuvent être entrées ou sélectionnées par un utilisateur, lesquelles décrivent un tableau de distribution avec un ou plusieurs appareils de commutation ou une installation de distribution comprenant plusieurs tableaux de distribution avec chaque fois un ou plusieurs appareils de commutation.

6. Logiciel selon au moins l'une des revendications précédentes,
**caractérisé en ce**
**que**, lors de l'exécution du logiciel de configuration (10) pour entrer ou sélectionner des données de base qui décrivent au moins un appareil de commutation, un ou plusieurs appareils de commutation, des tableaux de distribution et/ou des installations de distribution pour lesquels des données de base ont déjà été entrées ou sélectionnées peuvent être sélectionnés individuellement ou par groupes par un utilisateur et peuvent être copiés, y compris les données de base associées.

7. Logiciel selon au moins l'une des revendications précédentes,
**caractérisé en ce**
**qu'**il est prévu une base de données de blocs fonctionnels (18) dans laquelle sont contenus différents blocs fonctionnels prédéfinis pour le programme d'API permettant la mise en œuvre de fonctions de commande, de fonctions de signalisation et/ou de fonctions de verrouillage pour différents appareils de commutation.

8. Logiciel selon au moins l'une des revendications précédentes,
**caractérisé en ce**
**qu'**il est prévu une base de données de communication (20) dans laquelle sont stockées des données avec lesquelles l'appareil de commande et/ou de protection peut être configuré pour communiquer avec un ou plusieurs appareils externes disposés en dehors de l'appareil de commande et/ou de protection, les données comprenant de préférence des informations sur des protocoles de communication, sur des informations à échanger avec les appareils externes et sur les types d'adresses pour la communication avec les appareils externes.

9. Logiciel selon au moins l'une des revendications précédentes,
**caractérisé en ce**
**que**, lors de l'exécution du logiciel de configuration (10), des données qui contiennent des informations sur des informations à échanger avec des appareils externes peuvent être chargées dans le logiciel de programmation d'API (22), des combinaisons des informations à échanger avec des opérateurs logiques pouvant être ajoutées aux données de programme existantes pour le programme d'API par un utilisateur en utilisant le logiciel de programmation d'API (22).

10. Logiciel selon au moins l'une des revendications précédentes,
**caractérisé en ce**
**que**, lors de l'exécution du logiciel de configuration (10), des données de base, des données de configuration ou des données qui en dérivent déjà entrées ou sélectionnées peuvent être exportées, documentées et/ou sauvegardées sous une forme standardisée.

11. Logiciel selon au moins l'une des revendications précédentes,
**caractérisé en ce**
**que** des données de base ou des données de configuration à entrer ou à sélectionner lors de l'exécution du logiciel de configuration (10) peuvent être importées sous une forme standardisée.

12. Procédé pour créer des données de configuration et un programme d'API pour au moins un appareil de commande et/ou de protection comprenant un automate programmable industriel pour surveiller et/ou commander au moins un composant d'entraînement pour au moins un appareil de commutation pour la technique moyenne ou haute tension, dans lequel
on utilise un logiciel de configuration (10) dans lequel est intégré un logiciel de programmation d'API (22) pour programmer un automate programmable industriel,
le logiciel de configuration (10) comprenant un programme configurateur (12) qui commande le logiciel de programmation d'API (22) et/ou qui reçoit des données du logiciel de programmation d'API (22) et qui exécute ainsi automatiquement au moins l'une des étapes suivantes :
- démarrage et/ou arrêt du logiciel de programmation d'API (22) et/ou d'une interface utilisateur du logiciel de programmation d'API (22),
- transmission de données de programme pour le programme d'API par le programme configurateur (12) au logiciel de programmation d'API,
- création d'un programme d'API pour ledit au moins un appareil de commande et/ou de protection dans le logiciel de programmation d'API (22) en utilisant des données de programme pour le programme d'API transmis par le programme configurateur (12) au logiciel de programmation d'API (22) et
- réception d'un programme d'API transmis par le logiciel de programmation d'API (22) pour ledit au moins un appareil de commande et/ou de protection et/ou de données de programme pour le programme d'API transmises par le logiciel de programmation d'API (22).

13. Procédé selon la revendication 12,
**caractérisé en ce**
**que**, pour entrer ou sélectionner des données de base qui décrivent un appareil de commutation à configurer, un appareil de commutation prédéfini est sélectionné dans une bibliothèque (16) dans laquelle sont contenus différents appareils de commutation prédéfinis et des données de base prédéfinies associées aux appareils de commutation prédéfinis, qui décrivent l'appareil de commutation respectif, les données de base prédéfinies contenues dans la bibliothèque (16) et associées à l'appareil de commutation sélectionné étant utilisées pour la suite de la configuration.

14. Procédé selon l'une des revendications 12 ou 13,
**caractérisé en ce**
**que**, pour créer des données de programme pour le programme d'API, un ou plusieurs blocs fonctionnels sont sélectionnés à partir d'une base de données de blocs fonctionnels (18) dans laquelle sont contenus différents blocs fonctionnels prédéfinis pour le programme d'API permettant de mettre en œuvre des fonctions de commande, des fonctions de signalisation et/ou des fonctions de verrouillage pour différents appareils de commutation.

15. Procédé selon l'une des revendications 12, 13 ou 14,
**caractérisé en ce**
**que** des informations sur des informations à échanger avec des appareils externes sont chargées dans le logiciel de programmation d'API (22) et des combinaisons des informations à échanger avec des opérateurs logiques sont ajoutées aux données de programme existantes pour le programme d'API par un utilisateur en utilisant le logiciel de programmation d'API (22).

16. Procédé selon l'une des revendications 12 à 15,
**caractérisé en ce que**
- une entrée utilisateur (30) pour entrer ou sélectionner des données de base qui décrivent au moins un appareil de commutation à configurer est reçue,
- des données de programme pour le programme d'API sont générées en fonction des données de base entrées ou sélectionnées,
- un programme d'API pour l'appareil de commande et/ou de protection est créé dans le logiciel de programmation d'API (22) en utilisant les données de programme.
